# EUROPEAN PATENT APPLICATION

(11) **EP 2 460 899 A1**
(43) Date of publication of application: **06.06.2012**
(21) Application number: 09847785.4
(22) Date of filing: 27.07.2009
(51) Int. Cl.: C22C 38/00, C22C 38/38, C22C 38/58, F02M 25/07

(54) **FERRITIC STAINLESS STEEL FOR EGR COOLER AND EGR COOLER**

(71) Applicant: Nisshin Steel Co., Ltd., Chiyoda-ku, Tokyo 100-8366 (JP)
(72) Inventor: OKU, Manabu, Shunan-shi Yamaguchi 746-0023 (JP); NAKAMURA, Sadayuki, Shunan-shi Yamaguchi 746-0023 (JP); HORI, Yoshiaki, Shunan-shi Yamaguchi 746-0023 (JP)
(74) Representative: Wagner, Karl H.
(86) International application number: PCT/JP2009/063370
(87) International publication number: WO 2011/013193

(57) **Abstract**

[Problem] Provided are a ferritic stainless steel suitable for EGR cooler members to be Ni-brazed, and an EGR cooler comprising the steel.

An EGR cooler having a structure joined by Ni-brazing is produced by using a ferritic stainless steel which contains, by mass, C: at most 0.03%, Si: from more than 0.1 to 3%, Mn: from 0.1 to 2%, Cr: from 10 to 25%, Nb: from 0.3 to 0.8%, and N: at most 0.03%, and optionally selectively contains (a) one or more of Mo, Cu, V and W in a total amount of at most 4%, (b) one or more of Ti, Al and Zr in a total amount of at most 0.3%, (c) one or more of Ni and Co in a total amount of at most 5%, and (d) one or more of REMs (rare earth metals) and Ca in a total amount of at most 0.2%, with a balance of Fe and inevitable impurities.

## Description

### TECHNICAL FIELD

The present invention relates to a ferritic stainless steel for use as EGR cooler constituting members and to an EGR cooler formed of the members.

### BACKGROUND ART

In internal-combustion engine-equipped vehicles such as automobiles, a method of EGR (exhaust gas recirculation) may be employed for the purpose of NOx reduction in exhaust gas or for improvement of fuel efficiency. This is a technique of taking out a part of the exhaust gas discharged from an internal-combustion engine and again introducing it into the internal-combustion engine from the intake air side thereof. This has been popularized mainly in diesel engines, but recently has become applied also to gasoline engines.

The EGR system requires a device for cooling the exhaust gas to a temperature at which the gas can recirculate. This is an EGR cooler.

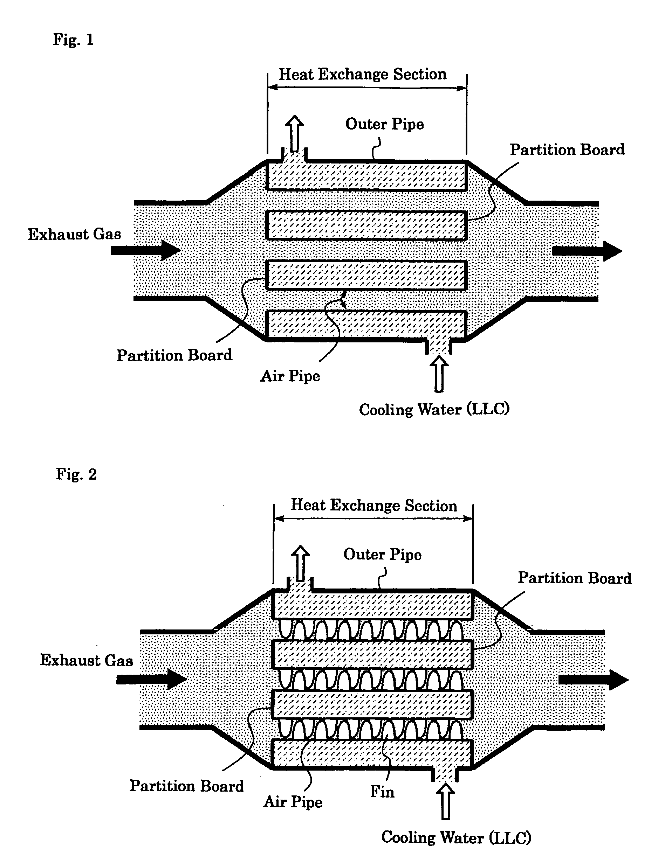

Fig. 1 and Fig. 2 graphically show structures of ordinary EGR coolers. There is provided a section partitioned by two partition boards in a part of the exhaust gas flow channel formed of an outer pipe, and in the section, a heat exchanger for transferring heat to cooling water is formed. The section partitioned by the partition boards is herein referred to as "heat exchange section". Air pipes are joined to the partition boards at the position at which the boards are holed, and exhaust gas runs through the air pipes in the heat exchange section. Cooling water runs around the air pipes. The air pipe may be formed of a mere metal pipe (Fig. 1), or may be provided with fins inside the pipe (Fig. 2).

The EGR cooler is formed of metal members such as outer pipe, partition boards, air pipe and further fins inside the air pipe, and the members are joined by brazing. However, the exhaust gas temperature on the inlet side of the heat exchange section may reach at most 800°C or so and the temperature on the outlet side thereof may reach at most 200°C or so, and therefore, in the section, Cu-brazing generally used for construction of ordinary heat exchangers is insufficient in point of the durability thereof. Accordingly, to the EGR cooler, applied is Ni-brazing excellent in high-temperature oxidation resistance and high-temperature strength (BNi-5, BNi-6 or the like in JIS Z3265).

The metal members constituting the EGR cooler are required to have the following characteristics:
(1) Good in Ni-brazability.
(2) Good in corrosion resistance to snowmelt salts. This is because an EGR cooler is placed inside an engine room and is therefore in an environment where a snowmelt salt sprayed on a road may readily adhere thereto.
(3) Good in corrosion resistance to LLC (long life coolant, for example, ethylene glycol). This is because LLC is generally used as the cooling water in EGR.
(4) Good both in high-temperature strength and in high-temperature oxidation resistance. This is because an EGR cooler is exposed to high-temperature exhaust gas.
(5) Good in corrosion resistance to dew condensation water. This is because in an EGR cooler, dew condensation often occurs near the exhaust gas outlet side during driving, and after driving, dew condensation often occurs in the exhaust gas contact area.

### CITATION LIST

### PATENT REFERENCES

Patent Reference 1: JP07-292446A
Patent Reference 2: JP2003-193205A

### SUMMARY OF THE INVENTION

### PROBLEMS THAT THE INVENTION IS TO SOLVE

In view of the above-mentioned necessary characteristics, at present, austenitic stainless steel such as typically SUS304 and SUS316 is mainly used as the metal members to constitute an EGR cooler. However, austenitic stainless steel has a large thermal expansion coefficient and is therefore problematic in that the oxide scale formed at high temperatures may peel off in cooling to come into an engine, or may often undergo thermal fatigue failure in repeated cooling/heating cycles. In addition, the high-temperature strength of the steel of the type is desired to be further improved. Further, since the steel contains a large amount of expensive Ni, the material cost thereof is high.

On the other hand, ferritic stainless steel has a smaller thermal expansion coefficient than austenitic steel, and the material cost thereof is generally lower than that of austenitic steel. Ferritic stainless steel is much used for exhaust manifolds and mufflers for constituting exhaust gas flow channels. However, in Ni-brazing, the material must be exposed to high temperature of, for example, 1100°C or higher. At such high temperatures, in general, ferritic stainless steel often undergoes crystal grain coarsening and its toughness may be thereby lowered.

The above-mentioned Patent Reference 1 discloses a ferritic stainless steel of good brazability for heat exchangers. However, in the reference, Cu-brazing is taken into consideration for the brazability, and nothing is intended therein relating to the improvement of Ni-brazability and to the prevention of crystal grain coarsening in Ni-brazing.

The present invention is to provide a ferritic stainless steel favorable for EGR cooler members to be worked by Ni-brazing, and an EGR cooler using it.

### MEANS FOR SOLVING THE PROBLEMS

The above-mentioned object can be attained by a ferritic stainless steel for EGR cooler members, which contains, by mass, C: at most 0.03%, Si: from more than 0.1 to 3%, Mn: from 0.1 to 2%, Cr: from 10 to 25%, Nb: from 0.3 to 0.8%, N: at most 0.03%, preferably having a total content of C and N of at least 0.01%, and optionally selectively contains the following:
(a) one or more of Mo, Cu, V and W in a total amount of at most 4%,
(b) one or more of Ti, Al and Zr in a total amount of at most 0.3%,
(c) one or more of Ni and Co in a total amount of at most 5%,
(d) one or more of REMs (rare earth metals) and Ca in a total amount of at most 0.2%,
with a balance of Fe and inevitable impurities.

The invention also provides an EGR cooler comprising constitutive members formed of a steel material of the above-mentioned steel, in which at least the members are joined with the other member by Ni-brazing. The members include, for example, outer pipes, partition boards, air pipes, fins fitted inside the air pipes, etc.

The invention also provides an EGR cooler in which the members to be in contact with both vehicle exhaust gas and cooling water are formed of a steel material of the above-mentioned steel, and in which at least the members are joined with the other member by Ni-brazing. The members to be in contact with both vehicle exhaust gas and cooling water include, for example, outer pipes, partition boards, air pipes, etc.

### ADVANTAGE OF THE INVENTION

According to the invention, there is provided a ferritic stainless steel good in Ni-brazability and toughness. Using the steel realizes an EGR cooler having a higher high-temperature strength, releasing less oxide scale and having a lower material cost than existing EGR coolers that use austenitic stainless steel as the members thereof.

### BRIEF DESCRIPTION OF THE DRAWINGS

[Fig. 1] A view schematically illustrating a structure of an EGR cooler.
[Fig. 2] A view schematically illustrating a structure of an EGR cooler of a type having fins inside the air pipes thereof.

### MODE FOR CARRYING OUT THE INVENTION

As described above, for improving the durability of EGR coolers, it is advantageous to employ a ferritic steel having a smaller thermal expansion coefficient. However, in the environment where EGR coolers are used, the constitutive members thereof may be exposed to high temperature of 700°C or higher and at most 800°C or so. In such a case, in particular, taking a measure will be important for preventing the reduction in the high-temperature strength of the ferritic steel. In Ni-brazing, the steel may be kept at high temperatures of from 1050 to 1150°C or so, and therefore steel composition planning will be important for inhibiting crystal grain coarsening.

In general, a ferritic stainless steel has a higher strength level than an austenitic stainless steel in a middle-temperature range of from room temperature up to 600°C or so. However, in a high-temperature range of 700°C or higher, the strength level reduction becomes great. As a method for preventing the high-temperature strength reduction, it is known that Nb addition is effective. Specifically, when Nb is added to a ferritic stainless steel in an amount of 0.2% by mass or so, then the high-temperature strength of the steel can be remarkably increased. The high-temperature enhancement to be attained by Nb addition is mainly owing to "solid solution Nb". Accordingly, the composition of a ferritic stainless steel for use in a high-temperature range is generally so designed as to reduce as much as possible the content of C and N therein in order to fully secure the amount of solid solution Nb therein.

On the other hand, for preventing crystal grain coarsening in a ferritic stainless steel, it may be considered that solid solution Nb will act effectively. However, according to the present inventors' studies, it has been found that, for preventing crystal grain coarsening at an Ni-brazing temperature, addition of Nb in an amount of 0.2% by mass or so is insufficient. As a result of detailed investigations using various types of Ni-brazing materials, it has become clarified that securing the Nb content of at least 0.3% by mass is important.

It is considered that for preventing crystal grain coarsening by Nb addition, the pinning effect of Nb carbide, Nb nitride and Nb carbonitride (these will be collectively referred to as "Nb carbide/nitride") will be significant, in addition to the coarsening preventing effect of solid solution Nb. Accordingly, in steel composition planning in the invention, it is rather advantageous to secure the content of C and N in some degree. Concretely, it is effective that the total content of C and N is at least 0.01% by mass. In addition, it may be considered that, when the Nb content is secured sufficiently, then the pinning effect of the precipitates such as Fe₂Nb (Laves) and Fe₃NbC (M6X) may be favorable for preventing crystal grain coarsening.
Preventing crystal grain coarsening in steel is especially effective for preventing the reduction in the low-temperature toughness of the steel.

Regarding the other alloying ingredients than Nb, it has been found that the increase in the solid solution of the elements Mo, Cu, V and W contributes more to the increase in the high-temperature strength of the steel. It has also been found that Ni and Co are extremely effective for inhibiting the toughness reduction in the case where crystal grains have been coarsened in some degree. On the other hand, it has been clarified that, Ti, Al, Zr, REMs and Ca have a factor of worsening the flowability (wettability) of the Ni-brazing material on the surface of a steel material in Ni-brazing. This may be considered because, in heating for Ni-brazing, oxides of these elements may be readily formed on the surface of the steel material. However, as described below, there occurs no problem so far as the content of these elements is controlled to fall within a suitable range.

The present invention has been completed on the basis of these findings. The alloying ingredients are described below.

C and N are elements to form Nb carbide/nitride in combined addition with Nb. When Nb is consumed and solid solution Nb is decreased by these precipitates, then the high-temperature strength increasing effect and the crystal grain coarsening preventing effect of solid solution Nb may be thereby retarded. Accordingly, in the invention, the C content must be restricted to at most 0.03% by mass, and is preferably at most 0.025% by mass. The N content must also be restricted to at most 0.03% by mass, and is preferably at most 0.025% by mass.

However, for preventing the crystal grain coarsening in Ni-brazing, the pinning effect of Nb carbide/nitride is also significant, as described above. Accordingly, it is advantageous to secure the content of C and N in some degree. As a result of various investigations, it is desirable that the total content of C and N is controlled to be at least 0.01% by mass. Regarding the individual elements, more preferably, the C content is at least 0.005% by mass and the N content is at least 0.005% by mass.

Si is an element for improving the high-temperature oxidation resistance of steel. However, an excessive Si content may harden the ferrite phase and may be a cause of worsening the workability of steel. In addition, it also worsens the Ni-brazability (wettability of steel with Ni-brazing material). As a result of various investigations, the Si content is restricted to a range of from more than 0.1 to 3% by mass, and is more preferably within a range of from 0.3 to 2.5% by mass. The uppermost limit may be restricted to 1.5% by mass.

Mn is an element of improving the high-temperature oxidation resistance of steel, especially the scaling resistance thereof. However, too much addition of the element promotes the formation of an austenite phase at high temperatures. In the invention, it is desirable that the steel has a ferrite single-phase composition not forming an austenite phase at an Ni-brazing temperature. As a result of various investigations, the Mn content is controlled to fall within a range of from 0.1 to 2% by mass.

Cr has an effect of stabilizing the oxidation resistance of steel at high temperatures. Accordingly, the Cr content of at least 10% by mass must be secured. However, too much Cr detracts from the producibility and the workability of the steel material. Accordingly, the Cr content is restricted to a range of at most 25% by mass.

Nb is an important element in the invention, and as described above, it effectively acts for increasing the high-temperature strength of steel and for preventing the crystal grains in steel from coarsening at Ni-brazing. Regarding the increase in the high-temperature strength, mainly Nb solid-solution strengthening greatly contributes toward increasing the strength, but the precipitation strengthening by the Nb carbide/nitride finely dispersed in the ferrite matrix is also effective for increasing the high-temperature strength of steel. Regarding the prevention of crystal grain coarsening, the pinning effect of Nb nitride/carbide effectively acts thereon along with the Nb solute strengthening. For fully exhibiting these effects, it is important that the content of C and N is restricted to the above range and the Nb content is secured to be at least 0.3% by mass. In particular, for preventing crystal grain coarsening in Ni-brazing, increasing the Nb content is effective, and preferably, the Nb content is at least 0.4%, more preferably at least 0.5%. However, when the Nb content is too large, then it may have some negative influence on the hot workability and the surface quality of steel. Accordingly, the Nb content is restricted to at most 0.8% by mass.

Mo, Cu, V and W also contribute toward increasing the high-temperature strength of steel owing to solid-solution strengthening of the elements. Accordingly, if desired, the steel of the invention may contain one or more of these elements. In particular, the steel effectively contains these elements in a total amount of at least 0.05% by mass. However, too much addition of these elements may have some negative influence on the hot workability of the steel. In addition, it may be a factor of worsening the low-temperature toughness of the steel. As a result of various investigations, in case where one or more of Mo, Cu, V and W is added to the steel, the total amount thereof must be restricted to at most 4% by mass.

Of Ti, Al and Zr, Ti and Zr bond to C and N to form fine precipitates, and these disperse in steel therefore exhibiting an effect of increasing the high-temperature strength of steel. Al exhibits an effect of improving the high-temperature oxidation resistance of steel. Accordingly, the steel of the invention may optionally contain one or more of these elements. However, when these elements are added too much to steel, they provide a factor of worsening the hot workability and the surface quality of steel. In addition, these elements form a tough oxide film on the surface of steel, and the oxide film may worsen the flowability of Ni-brazing material. As a result of investigations, in case where one or more of Ti, Al and Zr are added to steel, the total amount thereof must be restricted to at most 0.3% by mass. In particular, controlling the total amount to fall within a range of from 0.03 to 0.3% by mass is effective, more preferably within a range of from 0.03 to 0.25% by mass.

Ni and Co are extremely effective for preventing the reduction in toughness of steel when the crystal grains in steel have been coarsened in some degree by Ni-brazing. In addition, these elements are also advantageous for increasing the high-temperature strength of steel. Accordingly, if desired, one or more of these elements may be added to the steel of the invention, and in particular, it is effective to secure the total content of Ni and Co of at least 0.5% by mass. However, excessive addition of Ni and Co is unfavorable as causing formation of an austenite phase in a high-temperature range. In case where one or more of Ni and Co are added to the steel of the invention, the total content of Ni and Co must be controlled to fall within a range of at most 5% by mass.

REMs (rare earth metals) and Ca are, like Al, elements of improving the high-temperature oxidation resistance of steel, and one or more of these may be optionally added to the steel. In particular, securing the total content of REMs and Ca of at least 0.01% by mass is more effective. However, too much addition of those elements may lower the producibility of steel owing to reduction in the toughness thereof. Accordingly, in case where one or more of REMs and Ca are added, the total amount thereof must be controlled to fall within a range of at most 0.2% by mass.

It has been confirmed that the ferritic stainless steel having the composition as above is on a problemless level in point of resistance to snowmelt salts, resistance to LLC and resistance to dew condensation water, as compared with austenitic steels used in conventional EGR coolers. Regarding the high-temperature strength (0.2% yield strength) and the scaling resistance thereof in an exhaust gas atmosphere, the ferritic stainless steel has been improved more than austenitic steels.

The ferritic stainless steel having the composition as above can be formed into a steel sheet according to an ordinary method, and then worked into members such as outer pipes, partition boards, air pipes, fins to be fitted in air pipes and the like to constitute EGR coolers. These members are joined by Ni-brazing to construct EGR coolers. It is unnecessary that all the constitutive members of EGR coolers are formed of the steel of the present invention. However, the steel of the invention fully secures the corrosion resistance to LLC and has been improved in point of both the high-temperature oxidation resistance in an exhaust gas atmosphere and the resistance to crystal grain coarsening and the wettability in Ni-brazing. Accordingly, use of the steel of the invention for the members that are applied to Ni-brazing and are kept in contact with both vehicle exhaust gas and cooling water is especially effective.
The members include, for example, outer pipes, partition boards and air pipes.

### EXAMPLES

A steel having the chemical composition shown in Table 1 was produced by melting, the obtained steel ingot was hot-forged into a round bar having a diameter of 15 mm and a sheet having a thickness of 30 mm. The round bar was processed for solution heat treatment at a controlled temperature within a range of from 1000 to 1100°C. The sheet was hot-rolled into a hot-rolled sheet having a thickness of 4 mm. This was annealed and then cold-rolled to have a thickness of 1.5 mm, and thereafter finally annealed at a controlled temperature within a range of from 1000 to 1100°C. B4 and B5 are austenitic stainless steels.

**Table 1**

| Group | No. | Chemical Composition (% by mass) | | | | | | | | | | | | | | | | |
|---|---|---|---|---|---|---|---|---|---|---|---|---|---|---|---|---|---|---|
| | | C | Si | Mn | Ni | Cr | Nb | Ti | Al | N | Mo | Cu | W | V | Co | Zr | REM | Ca |
| | A1 | 0.009 | 0.92 | 1.09 | - | 13.93 | 0.39 | - | - | 0.008 | - | - | - | - | - | - | - | - |
| | A2 | 0.012 | 0.54 | 0.24 | - | 18.53 | 0.43 | - | - | 0.012 | - | 0.46 | - | - | - | - | - | - |
| | A3 | 0.008 | 0.28 | 1.02 | - | 18.37 | 0.42 | - | - | 0.013 | 1.93 | - | - | - | - | - | - | - |
| | A4 | 0.008 | 0.33 | 1.01 | - | 18.33 | 0.63 | - | - | 0.011 | 2.01 | - | - | - | - | - | - | - |
| | A5 | 0.009 | 0.69 | 1.33 | 0.72 | 19.01 | 0.31 | 0.06 | 0.07 | 0.009 | - | 0.45 | 0.09 | - | - | - | - | - |
| Steels of the Invention | A6 | 0.007 | 2.30 | 0.24 | 0.26 | 16.49 | 0.55 | 0.13 | - | 0.008 | 0.34 | 1.30 | 0.10 | - | - | - | - | - |
| | A7 | 0.013 | 0.58 | 0.64 | 0.37 | 17.34 | 0.75 | 0.02 | 0.25 | 0.009 | - | - | 0.18 | 0.06 | - | - | 0.05 | 0.03 |
| | A8 | 0.025 | 0.50 | 0.87 | 0.93 | 16.44 | 0.60 | 0.07 | 0.06 | 0.014 | - | 0.22 | - | 0.05 | 3.21 | - | - | - |
| | A9 | 0.006 | 0.95 | 0.88 | - | 10.50 | 0.51 | - | 0.08 | 0.009 | 0.10 | 0.30 | - | 0.09 | - | - | - | - |
| | A10 | 0.009 | 0.26 | 0.47 | 0.25 | 17.28 | 0.49 | - | 0.09 | 0.012 | 0.16 | 0.43 | - | - | - | 0.15 | - | - |
| | A11 | 0.008 | 0.30 | 0.28 | - | 18.38 | 0.39 | 0.02 | 0.09 | 0.016 | - | 0.57 | 3.15 | - | - | - | - | - |
| | B1 | 0.035 | 0.30 | 2.80 | - | 22.30 | 0.10 | 0.07 | 0.07 | 0.022 | 0.11 | 0.50 | 0.08 | - | - | - | - | - |
| | B2 | 0.006 | 0.46 | 0.38 | 0.34 | 10.50 | 0.09 | 0.06 | 0.06 | 0.013 | 1.56 | 0.26 | 0.14 | - | - | - | - | - |
| Comparative | B3 | 0.016 | 0.50 | 0.44 | 0.26 | 18.46 | 0.22 | 0.35 | 0.04 | 0.009 | 3.41 | 1.60 | - | - | - | - | - | - |
| Steels | B4 | 0.013 | 0.46 | 0.34 | 8.50 | 15.97 | 0.29 | 0.23 | 0.25 | 0.009 | 0.12 | 0.55 | - | - | 0.53 | - | - | - |
| | B5 | 0.009 | 3.28 | 0.49 | 7.60 | 16.34 | 0.30 | 0.06 | - | 0.012 | 0.43 | 0.34 | - | 0.05 | - | - | 0.15 | 0.11 |
| | B6 | 0.015 | 0.06 | 0.07 | - | 11.50 | 0.85 | 0.21 | 0.10 | 0.041 | 0.32 | 1.60 | 0.05 | - | - | - | - | - |

| | | | | | | | | | | | | | | | | | | |
|---|---|---|---|---|---|---|---|---|---|---|---|---|---|---|---|---|---|---|
| Underlined: Outside the scope of the invention. | | | | | | | | | | | | | | | | | | |

The obtained steel materials were inspected for the characteristics thereof mentioned below.

### [Thermal Expansion Coefficient]

A test sample of 5 mm square × 50 mm length was taken out of the round bar after the solution heat treatment, set in a thermal expansion tester, heated at a heating rate of 2°C/min, and the mean thermal expansion coefficient of the sample from room temperature (25°C) up to 700°C was determined.

### [0.2% Yield Strength at 700°C]

A high-temperature tensile test piece having a diameter of 10 mm in the parallel part thereof was taken out of the round bar after the solution heat treatment, and according to JIS G056, this was tested in a high-temperature tensile test at 700°C to thereby determine the 0.2% yield strength thereof. The samples of which the 0.2% yield strength at 700°C is at least 100 N/mm2 exhibit better characteristics than those of conventional austenitic steels for EGR coolers, and therefore in this, those samples on the level were considered acceptable.

### [High-Temperature Oxidation Resistance in Repeated Cycles]

A sample having a size of 25 mm × 35 mm × 1.5 mm was cut out of the cold-rolled annealed sheet, and its entire surface was finished by #400 wet-polishing to prepare a high-temperature oxidation test piece. Simulated for repeated use as an EGR cooler member, the test piece was cycle-aged. One cycle comprises "heating at 900°C for 25 minutes followed by cooling at room temperature for 10 minutes" in an atmosphere of "air + 60% saturated water vapor", and every test piece was aged for 1000 cycles. The mass change of the test piece before and after the test (plus means increase, minus means decrease) was divided by the surface area of the test piece before the test to thereby give the mass change per the unit area of the test piece. When the absolute value of the mass change is not more than 10 mg/m², then the sample could be evaluated as one having excellent high-temperature oxidation resistance as EGR cooler members, and those having the value of not more than 5 mg/m² are especially excellent.

### [Ni Brazability (wettability)]

A brazing test piece having a size of 10 mm × 20 mm × 1.5 mm was cut out of every cold-rolled annealed sheet. Two such test pieces were taken out of every sheet. One of them was put horizontally, and a pasty Ni-brazing material was applied onto the entire surface thereof in a thickness of 0.5 mm. Another test piece was put onto it, thereby forming a three-layered laminate of test piece/Ni-brazing material/test piece. Kept horizontally, the laminate was put in a vacuum furnace, and after vacuuming the furnace, the laminate was heated therein at 1150°C for 30 minutes. After cooled, the laminate was taken out, and the surface of the upper-layered test piece (to which the Ni-brazing material had not been applied) was checked for the area thereof wetted with the Ni-brazing material. The wetted area was divided by the total area of the entire one surface of the test piece to give the Ni-brazing percentage. The samples of which the Ni-brazing percentage was at least 50% were ranked as A; those of which the percentage was from 20% to less than 50% were ranked as B; and those of which the percentage was less than 20% were ranked as C. The samples ranked as B or higher were considered acceptable. The Ni-brazing material used here had a composition of 19% by mass Cr - 10% by mass Si - 71% by mass Ni (corresponding to BNi-5 in JIS Z3265).

### [Resistance to Crystal Grain Coarsening]

The test piece tested for the Ni-brazability was checked for the metallographic structure of the cross section thereof (cross section parallel to the rolling direction and the thickness direction; L cross section), using an optical microscope. The sample was etched with a mixed acid of hydrofluoric acid + nitric acid. The samples having a mean crystal grain size of at most 200 µm were ranked as A; those having a mean crystal grain size of from more than 200 µm to 500 µm were ranked as B; and those having a mean crystal grain size of more than 500 µm were ranked as C. The samples ranked as B or higher were considered acceptable.

### [Low-Temperature Toughness]

A cold-rolled annealed sheet having a thickness of 1.5 mm was heat-treated according to the same heating pattern as that in the above-mentioned Ni-brazability evaluation, and a V-notched Charpy impact test piece was taken out of the steel sheet. The test piece was tested in a Charpy impact test at 0°C according to JIS Z2242. The test piece was so collected that the hammer hitting direction thereon in the test could be the direction perpendicular to the rolling direction of the sheet (C direction). The samples of which the Charpy impact value at 0°C was at least 100 J/cm² were ranked as A; those of which the value was from 50 J/cm² to less than 100 J/cm² were ranked as B; and those of which the value was less than 50 J/cm² were ranked as C. The samples ranked as B or higher were considered acceptable.
These results are shown in Table 2.

**Table 2**

| Group | No. | Thermal Expansion Coefficient (RT to 700°C) × 10⁻⁶(K⁻¹) | 0.2% Yield Strength at 700°C (N/mm²) | Mass Change in High-Temperature Oxidation Test (900°C × 1000 cycles) (mg/cm²) | Low-Temperature Toughness | Ni-Brazability (wettability) | Resistance to Crystal Grain Coarsening |
|---|---|---|---|---|---|---|---|
| | A1 | 12.4 | 145 | 2.2 | A | A | B |
| | A2 | 11.9 | 142 | 2.7 | A | A | B |
| | A3 | 12.2 | 161 | 1.8 | B | A | A |
| | A4 | 11.8 | 173 | 1.2 | B | A | A |
| | A5 | 11.8 | 105 | 2.5 | A | A | B |
| Examples of | A6 | 11.2 | 151 | 1.1 | A | B | A |
| the Invention | A7 | 12.2 | 138 | 2.4 | A | B | A |
| | A8 | 11.9 | 159 | 3.1 | A | A | A |
| | A9 | 12.3 | 148 | 4.1 | A | A | A |
| | A10 | 12.5 | 138 | 3.6 | A | A | A |
| | A11 | 11.8 | 145 | 2.9 | B | A | A |
| | B1 | 12.1 | 95 | 5.3 | C | A | C |
| | B2 | 11.1 | 162 | 16.8 | A | B | C |
| Comparative | B3 | 11.7 | 178 | 1.9 | C | C | B |
| Examples | B4 | 1.4 | 90 | -50.5 | A | C | A |
| | B5 | 18.9 | 85 | -48.3 | A | A | A |
| | B6 | 12.4 | 138 | 13.5 | A | C | B |

As known from Table 2, the ferritic stainless steels of Examples of the invention all have a much smaller thermal expansion coefficient and are better in point of the 0.2% yield strength at 700°C and the high-temperature oxidation resistance in repeated cycles, as compared with the austenitic stainless steels of Comparative Examples B4 and B5. In addition, it has been confirmed that the steels of the invention all have sufficiently satisfactory characteristics as EGR cooler members in point of the Ni-brazability (wettability), the resistance to crystal grain coarsening and the low-temperature toughness.

As opposed to these, in the steel of Comparative Example B1, the C content was high and the Nb content was low, and therefore the solid solution Nb amount therein was insufficient, and the steel was poor in point of the high-temperature strength (0.2% yield strength at 700°C) and the resistance to crystal grain coarsening. In addition, in this, since the Mn content was high, an austenite phase was formed at high temperatures, and it may be considered that the phase would be partly changed into a martensite phase, and the low-temperature toughness of the steel was therefore poor. In B2, the Nb content was low but the content of C and N was relatively low, and the solid solution Nb amount could be suitably secured and the high-temperature strength (0.2% yield strength at 700°C) of the steel was good. However, in this, fine dispersion of Nb carbide/nitride was small, and the resistance of the steel to crystal grain coarsening was insufficient. In B3, the Ti content was too large and therefore an oxide film readily formed in Ni-brazing, and as a result, the Ni-brazability of the steel was poor. In this, in addition, since the total content of Mo, Cu, V and W was too high, the low-temperature toughness of the steel was low. B4 and B5 are austenitic stainless steels and had a high thermal expansion coefficient. The high-temperature strength (0.2% yield strength at 700°C) of these steels were on a lower level than the other ferritic steels. In addition, owing to the high thermal expansion coefficient thereof, the steels often scaled in repeated heat cycles, and the mass change was a large minus value. In B6, the total content of Ti, Al and Zr was too high, and therefore an oxide film readily formed on the surface of the steel in Ni-brazing. That is, the Ni-brazability of the steel was poor.

## Claims

1. A ferritic stainless steel for EGR cooler members, which contains, by mass, C: at most 0.03%, Si: from more than 0.1 to 3%, Mn: from 0.1 to 2%, Cr: from 10 to 25%, Nb: from 0.3 to 0.8%, and N: at most 0.03%, with a balance of Fe and inevitable impurities.

2. The ferritic stainless steel as claimed in claim 1, further containing one or more of Mo, Cu, V and W in a total amount of at most 4%.

3. The ferritic stainless steel as claimed in claim 1 or 2, further containing one or more of Ti, Al and Zr in a total amount of at most 0.3%.

4. The ferritic stainless steel as claimed in any of claims 1 to 3, further containing one or more of Ni and Co in a total amount of at most 5%.

5. The ferritic stainless steel as claimed in any of claims 1 to 4, further containing one or more of REMs (rare earth metals) and Ca in a total amount of at most 0.2%.

6. The ferritic stainless steel as claimed in any of claims 1 to 5, wherein the total content of C and N is at least 0.01% by mass.

7. An EGR cooler comprising constitutive members formed of a steel material of the steel of any of claims 1 to 6, in which at least the members are joined with the other member by Ni-brazing.

8. An EGR cooler, in which the members to be in contact with both vehicle exhaust gas and cooling water are formed of a steel material of the steel of any of claims 1 to 6, and in which at least the members are joined with the other member by Ni-brazing.
